# EUROPÄISCHE PATENTSCHRIFT

(11) **EP 1 659 025 B1**
(45) Veröffentlichungstag und Bekanntmachung des Hinweises auf die Patenterteilung: **17.10.2007**
(21) Anmeldenummer: 04027621.4
(22) Anmeldetag: 20.11.2004
(51) Int. Cl.: B60P 1/44

(54) **Hubladebühne mit Überfahrbrücke**
Loading tailgate with a traversing bridge
Hayon élévateur avec un pont de transbordement

(43) Veröffentlichungstag der Anmeldung: 24.05.2006
(73) Patentinhaber: Bär, Gerd, 74078 Heilbronn (DE)
(72) Erfinder: Bär, Gerd, 74078 Heilbronn (DE)
(74) Vertreter: Dreiss, Fuhlendorf, Steimle & Becker

(56) Entgegenhaltungen:
- EP-A- 1 180 450
- DE-A1- 2 219 232
- FR-A- 2 807 370

## Beschreibung

### Stand der Technik

Standard-Hubladebühnen wie z.B. EP1180450 oder DE2219232 haben eine Plattform, die in der Fahrstellung entweder hinter dem Aufbau (z. B. Kühlaufbau mit Türen) steht oder den Aufbau verschließt. Im letzteren Fall wird die Hubladebühne so angebaut, dass die Tragarme der Hubladebühne am Heckschweller des Aufbaus anschlagen. Dabei bildet die Plattform eine Ebene mit dem Ladeboden. Zum Verschließen des Aufbaus wird die Plattform um 90° geschlossen.

Bei Anbau hinter den Türen wird im klassischen Fall bei Kühl- und Tiefkühlaufbauten der Heckschweller mit einer sogenannten Überfahrnase versehen, die es erlaubt, dort mit den Tragarmen analog dem zweiten Fall anzuschlagen und die Plattform um 90° zuschließen, so dass die Plattform frei hinter den Türen steht. Bei Kühl- und Tiefkühlaufbauten sind die dickwandigen Türen innenliegend und bündig mit dem Aufbauende. Lediglich die Türscharniere und die außenliegenden Drehstangenverschlüsse tragen auf. Die Tiefe der Überfahrnase in Fahrtrichtung richtet sich deshalb nach diesen Bauteilen.

Die Gegenlager für die Verschlusselemente (Drehstangenverschlüsse) sind in der Überfahrnase integriert. Damit hat der Fahrer bezüglich seinen Be- und Entladebedingungen gleiche Verhältnisse als wären keine Türen vorhanden (selbstverständlich mit der Ausnahme, dass er die Türen auf- und zumachen muss).

Weiter gibt es sogenannten Trockenfrachtkofferaufbauten, die im Gegensatz zu den Kühl- und Tiefkühlaufbauten dünne, unisolierte Aufbautüren haben, die auf dem Heckportal und damit auch auf dem Heckschweller aufliegen. Diese Türen haben innenliegende Drehstangenverschlüsse. Solche Aufbauten werden in Verbindung mit Hubladebühne nur dann eingesetzt, wenn gesteigerte Ansprüche an die Dichtheit des Aufbaus und/oder besondere Anforderungen an die Einbruchsicherheit gestellt werden.

Wird jetzt an einem Fahrzeug mit einem solchen Aufbau eine Hubladebühne benötigt, muss bei geschlossenen Türen die Hubladebühne so weit hochgefahren und dann geschlossen werden, dass Hubarme und Plattform nicht mit Türen und Verschlusslager kollidieren. Dies wird in der Regel damit erreicht, indem die Tragarme der Hubladebühne einen wegklappbaren, aber massiven Anschlag am Unterbau des Aufbaus erhalten. Soll die Hubladebühne in Fahrstellung gebracht werden, ist dieser Anschlag manuell einzuklappen. Soll hingegen mit der Hubladebühne bei geöffneter Plattform be- und entladen werden, muss dieser Anschlag manuell weggeklappt werden, so dass Hubarme und Plattform auf Ladebodenniveau hochfahren und die Tragarme am Heckschweller anschlagen.

### Technisches Problem

### beim Kühl- und Tiefkühlaufbau

Bevor die beschriebene Überfahrnase Stand der Technik war und bei nachträglichen Anbauten an Fahrzeugen die ursprünglich nicht für Hubladebühnen vorgesehen waren, gab es die Alternativlösung Überfahrwinkel. Ein solcher Überfahrwinkel ist z. B. dokumentiert in der Montageanleitung Standard, Ausgabe 4/96 der Gerd Bär GmbH. Auf den Seiten 5 bis 7 wird schematisch gezeigt, wie der Abstand zwischen Aufbau-Türen und der senkrecht stehenden Plattform mit einem Überfahrwinkel überbrückt werden kann. Bei diesem Überfahrwinkel handelt es sich um einen ganz normalen Stahlwinkel, der mit zwei Flacheisen am Tragarm angeschweißt wurde.

Hierbei musste das Hubwerk mit seinen Tragarmen vorher auf den Abstand Y montiert werden, erst danach konnte der Überfahrwinkel bei dieser Armstellung mit seiner oberen Fläche waagerecht als Verlängerung des Ladebodens fixiert und am Tragarm festgeschweißt werden. Die Position des Tragarms bezüglich des Maßes Y und des nicht dargestellten Maßes X wurde dadurch erzielt, dass der Tragarm unterhalb des gezeigten Heckschwellers einen massiven Anschlag hatte. Diesen massiven Anschlag herzustellen war reine Handarbeit und richtete sich nach den Aufbau- und Unterbaubedingungen und war damit zeit- und kostenintensiv. Auch das Anschweißen des Überfahrwinkels am Tragarm erforderte das Entfernen der Grundierung und die nachträgliche Schweißung an diesen Teilen, mit der Notwendigkeit, den Korrosionsschutz wieder herzustellen. Hier sei noch erwähnt, dass bei Kühlfahrzeugen aus Hygienegründen nur Edelstahl, Aluminium oder Kunststoff verwendet wird, so dass diese Lösung auch optisch und ästhetisch nicht überzeugend ist.

Stand der Technik ist, dass aufgrund dieser Nachteile fast nur noch die Überfahrnasen aus Edelstahl und Aluminium, die in die Heckschweller-Konstruktion integriert sind, verwendet werden. Nur in absoluten Ausnahmefällen greift man auf die Lösung Überfahrwinkel zurück.

Die beschriebene, in den Heckschweller integrierte Überfahrnase ist jedoch vom Aufwand her bei der Fertigung bei den Fahrzeugbauern recht teuer. In der Fertigung hat man zwei Lösungen, eine mit Hubladebühne und eine ohne, wobei die Lösung ohne Hubladebühne den Löwenanteil darstellt.

Ein weiteres Problem ist in den letzten Jahren dadurch entstanden, dass es an den Verladelagern vermehrt sogenannte Verladeschleusen mit Hohlrampen gibt, welche mit der geöffneten und abgesenkten Hubladebühne unterfahren werden können. Hierzu muss vor dem Andocken die Plattform geöffnet und gesenkt werden. Mit der so geöffneten Hubladebühne dockt das Fahrzeug in der Verladeschleuse wie ein Fahrzeug ohne Hubladebühne an.

Dabei wird häufig die Überfahrnase durch Kollision mit stationären Teilen beschädigt. Man kann diese beschädigten Überfahrnasen auch schön im Straßenbild beobachten. Diese Beschädigungen verursachen nicht nur Reparaturkosten, sondern schädigen auch den Isolierboden durch an zerstörten festen Dichtfugen eindringendes Wasser.

### beim Trockenfrachtkofferaufbau

Das Kernproblem hier ist, dass mit zwei Hubstellungen gearbeitet werden muss. Zwei Hubstellungen bedeuten einen verstellbaren, massiven Anschlag. In Wahrheit handelt es sich um zwei Anschläge, nämlich für beide Tragarme, die entweder einzeln manuell hintereinander bedient werden müssen oder es muss eine aufwendige Zentralbedienung geschaffen werden. Solche Anschläge sind individuell aufwendig herzustellen und damit sehr teuer. Eine fertige, oberflächenbeschichtete Bausatzerstellung ist bei den vorhandenen Stückzahlen nicht möglich.

Diese Lösung hat auch noch den großen Nachteil, dass, wenn der verstellbare Anschlag für die Verstauung der Hubladebühne in Fahrbereitschaft nicht bedient wird und beim Hochfahren der Hubladebühne mit der Plattform oder mit den Tragarmen mit den Türen kollidieren und beschädigt werden. Fährt der Fahrer die Hubladebühne ohne einklappen der Anschläge berechnend hoch, geschieht das nicht, dann jedoch steht die Hubladebühne mit ihrem parallelogrammförmigen Hubwerk und der senkrecht stehenden Plattform völlig frei hinter dem Aufbau. Die beim Fahrbetrieb entstehenden Schwingungen übertragen sich auf die Plattform, diese schwingt mitsamt den Tragarmen im Rahmen des möglichen Lagerspiels um mehrere Zentimeter, so dass ein starker Lagerverschleiß gegeben ist, da in der Fahrstellung die Hebel sehr klein und die Kräfte sehr groß sind.

Damit ein Anbau der Hubladebühne in diesem Fall überhaupt möglich ist, sind Ausschnitte an der Plattform notwendig, um den Freigang beim radiusförmigen Senken der Plattform an den Drehstangenverschlusslagern sicherzustellen.

### Lösung

Es war daher Aufgabe der Erfindung, eine Hubladebühne so auszugestalten, dass sie an ein Fahrzeug mit serienmäßigem Aufbau mit Türen durch reine Montagearbeit mit fertig oberflächenbehandelten Bauteilen angebaut werden kann.

Diese Aufgabe wird gemäß den Patentansprüchen und der Beschreibung gelöst.

### Erreichte Vorteile

Durch die erfindungsgemäße Ausführung wird bei Tiefkühlkoffern die Überfahrnase eingespart. Damit kann der Fahrzeugbauer einen serienmäßigen Kofferaufbau verwenden, so dass direkte und indirekte Kosten gespart werden, die größer sind als die Kosten der erfindungsgemäßen Überfahrbrücke.

Durch den Wegfall der Überfahrnase kann diese im Verladeschleusenbetrieb auch nicht beschädigt werden. Die erfindungsgemäße Überfahrbrücke ist bei diesem Be- und Entladevorgang außerhalb des Kollisionsbereichs.

Durch die erfindungsgemäße Ausgestaltung kann der Überfahrwinkel der Überfahrbrücke aus Edelstahl hergestellt werden, um den Hygiene- und Ästhetikanforderungen entsprechender Branchen zu genügen.

Bei Trockenfrachtkofferaufbauten entfällt der aufwendige bewegliche Anschlag in der Herstellung und es entfällt die Bedienung im Einsatz. Die Bedienung ist mit den Türen automatisch gegeben, so dass der Fahrer darauf nicht achten muss. Beschädigungen der Türen durch Kollision sind ausgeschlossen.

Die Hubladebühne ist durch das indirekte Anfahren des Heckschwellers automatisch für den Fahrbetrieb immer verspannt, welches Verschleiß der Lager vermeidet.

Die Montage der Überfahrbrücke erfolgt schnell, schraubbar und leicht auf den erforderlichen Anbauwinkel einstellbar.

### Beschreibung

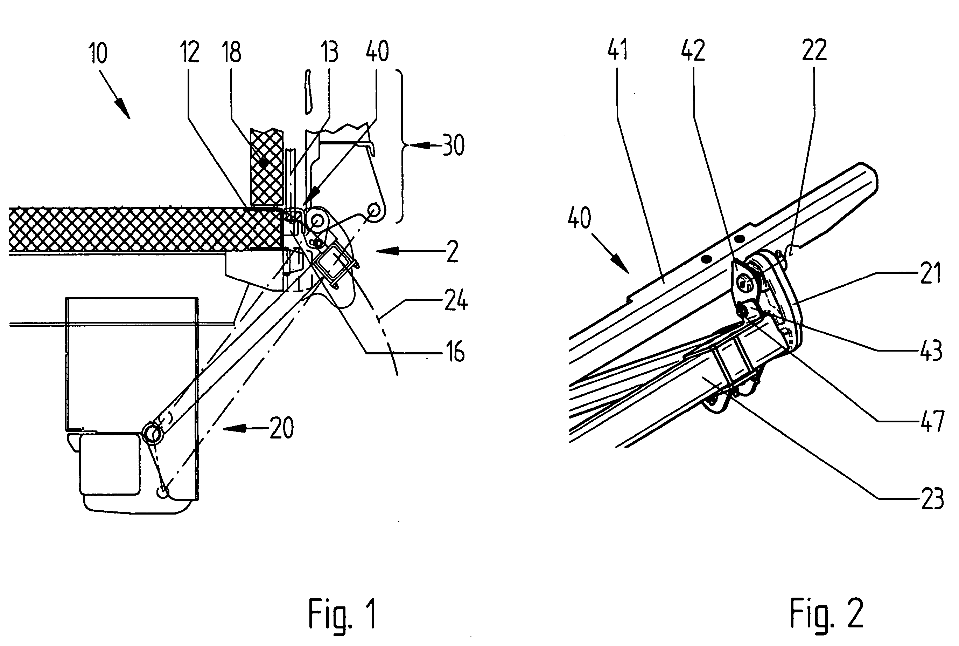

- Figur 1: zeigt das Heck eines Fahrzeugs mit Aufbau 10 für Tiefkühlkoffer und einer Hubladebühne 2, bestehend aus dem Hubwerk 20 und der Plattform 30. Der geschnittene Tiefkühlkofferaufbau 10 zeigt die innenliegenden Türen Tiefkühlkoffer 18, die mit dem Drehstangenverschluss außenliegend 13 in den unten und oben liegenden (letzteres nicht gezeigt) Verschlusslager Tiefkühlkoffer 16 verriegelt sind. Zwischen der Plattform 30 und dem Heckschweller Tiefkühlkoffer 12 ist die Überfahrbrücke 40 zu erkennen.

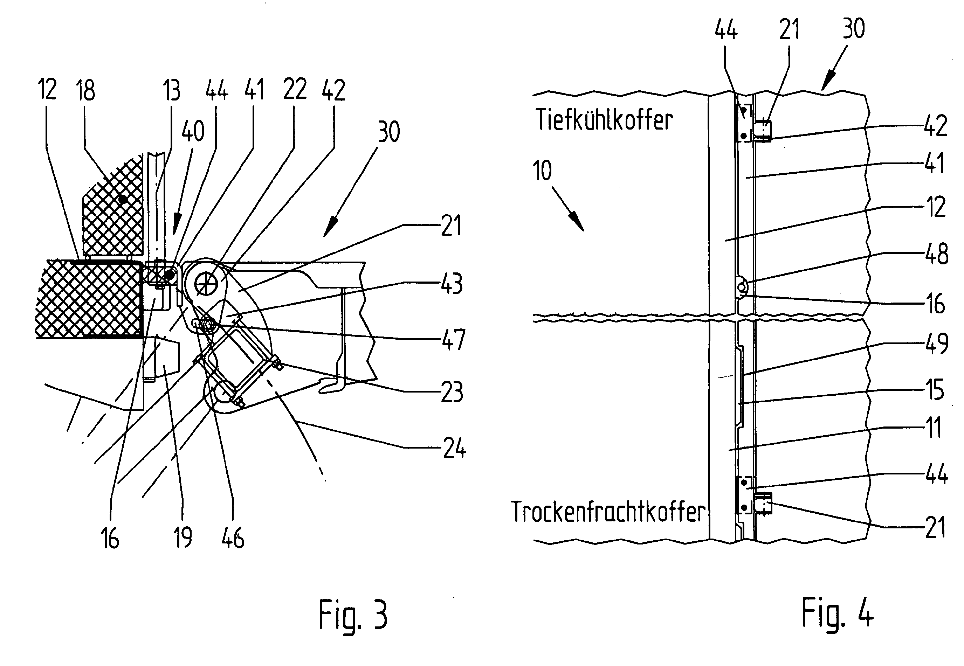

- Figur 2: zeigt nur den rechten Tragarm 21 und das Torsionsrohr 23, welches den nicht gezeigten linken Tragarm mit dem rechten verbindet. Die Überfahrbrücke 40, bestehend aus dem Überfahrwinkel 41 und dem Anschlusselement 42 ist einerseits im Drehpunkt Tragarm/Plattform 22 durch den nicht gezeigten Bolzen drehbar gelagert. Das andere Ende des Anschlusselements 42 hat ein nur in der Figur 3 sichtbares Bogenlangloch 46, durch welches die Überfahrbrücke 40 mit der Schraube 47 am Fixierwinkel 43 befestigt ist.
Das Bogenlangloch dient dazu, die Überfahrbrücke 40 um den Drehpunkt Tragarm/Plattform 22 dem jeweiligen Anbauwinkel der Tragarme 21 bei der Montage anzupassen. Der Fixierwinkel 43 seinerseits ist mit den nicht näher bezeichneten Schrauben und Gegenplatte am Torsionsrohr 23 befestigt.
Die nicht gezeigte Plattform 30 ist tragarmseitig im Drehpunkt Tragarm/Plattform 22 durch die ebenfalls nicht gezeigten Bolzen mit den Tragarmen 21 schwenkbar verbunden.
- Figur 3: zeigt eine Vergrößerung der Situation um die Überfahrbrücke 40. Im Gegensatz zu Figur 1 ist hier die Plattform 30 um den Drehpunkt Tragarm/Plattform 22 von der Senkrechten in die Waagerechte verschwenkt. Die Verschwenkung erfolgt durch den nicht weiter dargestellten und erklärten Neigezylinder. Die Überfahrbrücke 40 mit ihrem Anschlagklotz 44 drückt in dieser Arbeitsstellung durch den Tragarm 21 gegen den Heckschweller Tiefkühlkoffer 12. Das kreisförmige Ende des Tragarms 21, welches in einem Radius um den Drehpunkt Tragarm/Plattform 22 läuft, drückt direkt den Überfahrwinkel 41. Das Anschlusselement 42 hat im Drehpunkt Tragarm/Plattform 22 ein entsprechend ausgebildetes Loch, welches in dem hier nicht weiter gezeigten Bolzen so viel Luft hat, dass hier keine Kräfteübertragung stattfindet.
Weiter ist hier der Bewegungsradius Überfahrbrücke 24 der Vorderkante Überfahrbrücke eingezeichnet. Dieser Bewegungsradius Überfahrbrücke 24 darf beim Absenken weder die Verschlusslager Tiefkühlkoffer 16 (und 15) noch die Rammpuffer 19 berühren. In geschlossenem Zustand, wie in Figur 1 gezeigt, sind die Türen Tiefkühlkoffer 18 geschlossen und der Drehstangenverschluss außenliegend 13 im Verschlusslager Tiefkühlkoffer 16 im Eingriff.
Um eine Kollision des Überfahrwinkels 41 mit dem Drehstangenverschluss außenliegend 13 zu vermeiden, sind im Überfahrwinkel 41 Aussparungen angebracht, siehe Figur 4.
- Figur 4: zeigt im Halbschnitt oben die Draufsicht auf die Situation Tiefkühlaufbau, im unteren Halbschnitt die Situation Trockenfrachtaufbau.
Hinter den Heckschwellern 11/12 liegen in beiden Situationen der Überfahrwinkel 41, die Tragarme 21 und die Plattform 30 sowie verdeckt gezeichnet die Anschlagklötze 44. Zur Vermeidung der Kollision des Überfahrwinkels 41 mit dem Drehstangenverschluss außenliegend 13 hat bei der Situation Tiefkühlaufbau, Türen 18 geschlossen, der Überfahrwinkel 41 die Ausnehmung für Drehstangenverschluss Tiefkühlkoffer 48. Die Verschlusslager Tiefkühlkoffer 16, wie in Figur 3 gezeigt, liegen so tief, dass beim Senken der Plattform 30 im Bewegungsradius Überfahrbrücke 24 keine Kollision mit dem Überfahrwinkel 41 stattfindet.

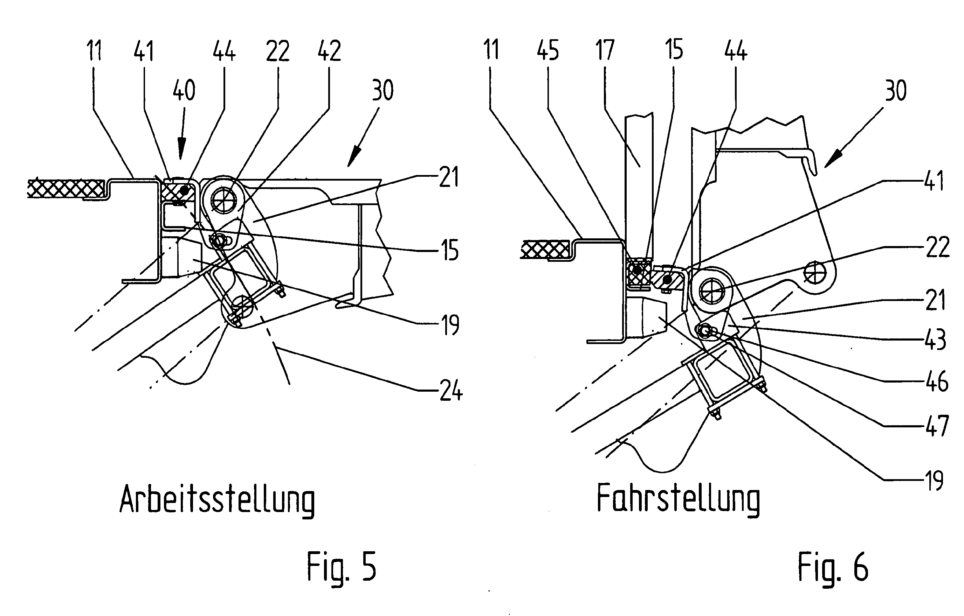

- Figur 5: zeigt den Schnitt durch einen Trockenfrachtkofferaufbau mit dem Heckschweller Trockenfrachtkoffer 11, der Plattform 30, schwenkbar getragen durch den Tragarm 21 im Drehpunkt Tragarm/Plattform 22. Der Überfahrwinkel 41 mit seinem Anschlagklotz 44 leitet die durch den Tragarm 21 eingeleiteten Kräfte an den Heckschweller 11 weiter. Beim Senken der Plattform beschreibt die Vorderkante des Überfahrwinkels 41 den Bewegungsradius Überfahrbrücke 24. Hier ist zu erkennen, dass dieser Bewegungsradius Überfahrbrücke 24 das Verschlusslager Trockenfrachtkoffer 15 durchschneidet.
Zur Vermeidung dieser Kollision sind in Figur 4 Ausnehmungen für Verschlusslager Trockenfrachtkoffer 49 zu erkennen. Sowohl diese Ausnehmungen als auch die Ausnehmungen für Drehstangenverschluss Tiefkühlkoffer 48 sind mit Hubwagen problemlos überfahrbar. Die Ausnehmungen 48 und 49 sind aufbautypisch gleich und können deshalb gleich beim Hersteller vorgenommen werden.
- Figur 6: zeigt die Fahrstellung beim Aufbau 10 Trockenfrachtkoffer. Hier sind die außenliegenden Türen Trockenfrachtkoffer 17 geschlossen. Dies erfolgt bevor die Hubladebühne 2 in Fahrstellung gebracht wird. Unterhalb der Türe Trockenfrachtkoffer 17 ist der Anschlagklotz Türe 45 jeweils an den Türen befestigt. Durch das Zuschwenken der Türen sind diese Anschlagklötze 45 automatisch in Position gebracht. Beim anschließenden Hochfahren der Tragarme 21 im Bewegungsradius Überfahrbrücke 24 schlagen jetzt die Anschlagklötze 44 der Überfahrbrücke 40 an den Anschlagklötzen Türe 45 an. Hierbei übernehmen die Anschlagklötze Türe 45 die Kräfteweiterleitung an den Heckschweller Trockenfrachtkoffer 11.

Jetzt kann die Plattform 30 mit dem nicht gezeigten Neigzylinder um 90° geschlossen werden.

### Legende

- 1: Fahrzeug
- 10: Aufbau
- 11: Heckschweller Trockenfrachtkoffer
- 12: Heckschweller Tiefkühlkoffer
- 13: Drehstangenverschluss außenliegend
- 14: Drehstangenverschluss innenliegend
- 15: Verschlusslager Trockenfrachtkoffer
- 16: Verschlusslager Tiefkühlkoffer
- 17: Türen Trockenfrachtkoffer
- 18: Türen Tiefkühlkoffer
- 19: Rammpuffer
- 2: Hubladebühne
- 20: Hubwerk
- 21: Tragarm
- 22: Drehpunkt Tragarm/Plattform
- 23: Torsionsrohr
- 24: Bewegungsradius Überfahrbrücke
- 30: Plattform
- 31: Anschlusskopf Plattform
- 32: Konsolplatten Anschlusskopf
- 40: Überfahrbrücke
- 41: Überfahrwinkel
- 42: Anschlusselement
- 43: Fixierwinkel
- 44: Anschlagklotz
- 45: Anschlagklotz Türe
- 46: Bodenlangloch
- 47: Schraube
- 48: Ausnehmung für Drehstangenverschluss Tiefkühlkoffer
- 49: Ausnehmung für Verschlusslager Trockenfrachtkoffer

## Patentansprüche

1. Hubladebühne (2) zur Befestigung an Fahrzeugen, umfassend eine Plattform (30) und ein im wesentlichen parallelogrammförmiges Hubwerk (20) mit zwei horizontal beabstandeten, bewegungsgekoppelten Tragarmen (21), die eine Überfahrbrücke (40) tragen, die das Überfahren mit Gabelhubwagen und Rollbehälter vom Aufbau auf die Plattform und umgekehrt ermöglicht,
**gekennzeichnet dadurch,**
**dass** die Überfahrbrücke (40) mit ihren Anschlusselementen (42) einerseits verschwenkbar im Drehpunkt Tragarm Plattform (22) gelagert und andererseits an tragarmfesten Gegenlagern verschraubt und damit an den Tragarmen (21) fixiert ist.

2. Hubladebühne zur Befestigung an Fahrzeugen nach Anspruch 1,
**gekennzeichnet dadurch,**
**dass** das Anschlusselement (42) zur Fixierung mit der Schrauben (47) um den Drehpunkt Tragarm/Plattform (22) ein Bogenlangloch (46) aufweist.

3. Hubladebühne zur Befestigung an Fahrzeugen nach den Ansprüchen 1 - 2,
**gekennzeichnet dadurch,**
**dass** das tragarmfeste Gegenlager oder der Fixierwinkel (43) ein Langloch zur Fixierung des Anschlusselements (42) aufweist.

4. Hubladebühne zur Befestigung an Fahrzeugen nach den Ansprüchen 1 - 3,
**gekennzeichnet dadurch,**
**dass** die Überfahrbrücke (40) mindestens im Bereich der Tragarme (21) je ein Anschlagklotz (44) aufweist, der die Überfahrbrücke (40) zum Heckschweller (11/12) distanziert.

5. Hubladebühne zur Befestigung an Fahrzeugen nach einem der vorangegangenen Ansprüchen,
**gekennzeichnet dadurch,**
**dass** der Fixierwinkel (43) auf dem Torsionsrohr (23) klemmbar befestigt ist.

## Claims

1. Loading tailgate (2) for fixing to vehicles, comprising a platform (30) and a substantially parallelogram-like lifting mechanism (20) with two horizontally spaced-apart, movement-coupled loadbearing arms (21), which carry a roll-over bridge (40), which allow fork lift trucks and roller containers to roll over from the superstructure on to the platform and vice versa, **characterized in that** the roll-over bridge (40) with its connecting elements (42) is mounted on one side such that it can pivot at the pivot of the loadbearing arm/platform (22) and, on the other side, is bolted to opposing mountings fixed to the loadbearing arm and is therefore fixed to the loadbearing arms (21).

2. Loading tailgate for fixing to vehicles according to Claim 1, **characterized in that** the connecting element (42) for fixing with the bolts (47) around the pivot of the loadbearing arm/platform (22) has a curved slot (46).

3. Loading tailgate for fixing to vehicles according to Claims 1 - 2, **characterized in that** the opposing mounting fixed to the loadbearing arm or the fixing angle (43) has a slot for fixing the connecting element (42).

4. Loading tailgate for fixing to vehicles according to Claims 1 - 3, **characterized in that**, at least in the region of the loadbearing arms (21), the roll-over bridge (40) has a stop block (44) in each case, which spaces the roll-over bridge (40) away from the rear sill (11/12).

5. Loading tailgate for fixing to vehicles according to one of the preceding claims, **characterized in that** the fixing angle (43) is fixed to the torsion tube (23) such that it can be clamped.

## Revendications

1. Hayon élévateur de chargement (2) destiné à être fixé à des véhicules et comprenant une plate-forme (30) et un groupe de levage (20) sensiblement en forme de parallélogramme, qui englobe deux bras de support (21) espacés horizontalement, couplés en mouvement, et supportant une passerelle de passage (40) permettant le passage avec des chariots élévateurs à fourche et des conteneurs roulants, de la caisse ou superstructure à la plate-forme et inversement,
**caractérisé en ce que** la passerelle de passage (40), avec ses éléments de raccordement (42), est d'une part montée de manière pivotante au niveau du point de rotation bras de support/plate-forme (22), et est d'autre part vissée à des paliers conjugués fixes avec les bras de support en étant ainsi fixée aux bras de support (21).

2. Hayon élévateur de chargement destiné à être fixé à des véhicules, selon la revendication 1, **caractérisé en ce que** l'élément de raccordement (42) présente, pour la fixation avec les vis (47) autour du point de rotation bras de support/plate-forme (22), un trou oblong (46) en forme d'arc.

3. Hayon élévateur de chargement destiné à être fixé à des véhicules, selon les revendications 1-2, **caractérisé en ce que** le palier conjugué fixe avec le bras de support, ou la cornière de fixation (43), présente un trou oblong pour la fixation de l'élément de raccordement (42).

4. Hayon élévateur de chargement destiné à être fixé à des véhicules, selon les revendications 1-3, **caractérisé en ce que** la passerelle de passage (40) présente, au moins dans la zone des bras de support (21), respectivement un bloc de butée (44) qui assure une distance d'espacement de la passerelle de passage (40) au seuil arrière (11/12).

5. Hayon élévateur de chargement destiné à être fixé à des véhicules, selon l'une des revendications précédentes, **caractérisé en ce que** la cornière de fixation (43) est fixée par serrage sur le tube de torsion (23).
